# EUROPEAN PATENT APPLICATION

(11) **EP 2 680 207 A1**
(43) Date of publication of application: **01.01.2014**
(21) Application number: 12305780.4
(22) Date of filing: 29.06.2012
(51) Int. Cl.: G06Q 20/40, H04L 29/06

(54) **Secured cloud data storage, distribution and restoration among multiple devices of a user**

(71) Applicant: Orange, 75015 Paris (FR)
(72) Inventor: Chazalet, Boris, London, W12 7HQ (GB); Ahmed, Tansir, Ilford, IG2 7PL (GB)

(57) **Abstract**

A method to associate a second electronic device to a user account, the user account being already associated to at least first content stored in a database server and to an at least first electronic device, said first content being encrypted using a public key for the first electronic device; the method being implemented by the database server and comprising the steps of receiving from the second electronic device a request to login with the user account, said request including authentication data, and when the authentication data is compatible with the user account and when the second electronic device is not associated to the user account, sending a request to the at least first electronic device for a re-encryption key from the first electronic device to the second electronic device (R_{1->2}) and associating the second electronic device and the re-encryption key received from the at least first electronic device with the user account.

## Description

### FIELD OF INVENTION:

This invention relates to secured cloud data storage, distribution and restoration among multiple devices of a user, invention based on proxy re-encryption technique.

### BACKGROUND:

Users are storing their data in network servers or in the cloud for different reasons. This could be to obtain a backup of their personal data, securely stored in a remote location, but also a way to easily access their data from several location or devices, or a way to share data with others users.

One main concern for users is security or data privacy: the stored data must not be accessible to anybody else, not even the service provider. One way of realizing this is to first encrypt data and then upload data to the cloud, this way only the owner of the data is able to access the data, the service provider only manages encrypted data and does not possess the means of decrypting the data (i.e. the cryptography keys), ensuring confidentiality.

A first way of implementing such method is by using symmetric cryptography, that is to say cryptography based on a single secret encryption key; data being encrypted or decrypted using the same secret key. This means that the only way to share data with someone else is to share the secret key, this solution offers no control on how the data stored on the cloud is shared as anyone can then share the secret key enabling access to the data. Moreover, as symmetric key must be exchanged to share data, there is a risk that the key may be compromised during the exchange, thus compromising all encrypted data.

A second way of implementing such method is by using asymmetric encryption, that is to say cryptography based on a pair of keys: a public key - potentially shared with everyone - and a private key - key kept secret by the owner. Data encrypted by the public key can only be decrypted using the private key. This method allows sharing of data with a user by using its public key to encrypt data to be shared: only the recipient is able to decrypt, using its private key. As in this method there is no exchange of secret key, the risk of compromising the data is limited.

The previous method presents a strong limitation: when a user wants to share data with someone else, he first needs to download said data, decrypt it, re-encrypt the data using the recipient's public key and then upload the data back to the cloud. These operations are very time consuming as bandwidth restriction may make the download and the upload of the data tedious, and the decryption and re-encryption of the data may take time on user device. Moreover, asymmetric encryption is much slower than symmetric encryption.

Hybrid encryption technique reduces some inconvenience of the previous method; hybrid encryption technique being a combination of symmetric and asymmetric encryption. In this technique, the content or data to be stored in the cloud is encrypted using a symmetric key, then said symmetric key is encrypted using an asymmetric encryption. In this solution, both the content encrypted using the symmetric key and said symmetric key encrypted using asymmetric encryption are stored within the cloud. Inconvenience over precedent method are reduced as only the encrypted symmetric key needs to be re-encrypted, that is to say a much smaller file that the content, which preserve both the bandwidth when uploading or downloading the data and the processor time needed to re-encrypt data. Still, if inconveniences of precedent method are reduced, the content - or here the symmetric key associated to the content - still need to be downloaded, decrypted, re-encrypted and uploaded; it is thus impossible to share a content uploaded by a first electronic device with a second electronic device if the first electronic device is not available. It is to be noted that the man skilled in the art will use a different symmetric key for each content, thus, if one symmetric key is compromised, only the content associated to said symmetric key will be compromised.

A new encryption technology, called Proxy-Re-Encryption (PRE) solves the previous problem. This technology is described in an article by G. Anteniese, K. Fu, M. Green and S. Hohenberger, "Improved Proxy Re-Encryption Schemes with Applications to Secure Distributed Storage" (in ACM Transactions on Information and System Security - TISSEC, vol. 9, no. 1, pp. 1-30, Feb. 2006). This technology is based on asymmetric encryption, but offers a method to re-encrypt already encrypted data. This solves the previous problem as it exempts the electronic device from downloading the encrypted data, decrypting it, re-encrypting it and then uploading it back to the cloud data storage. PRE allows a direct re-encryption of the data within the cloud.

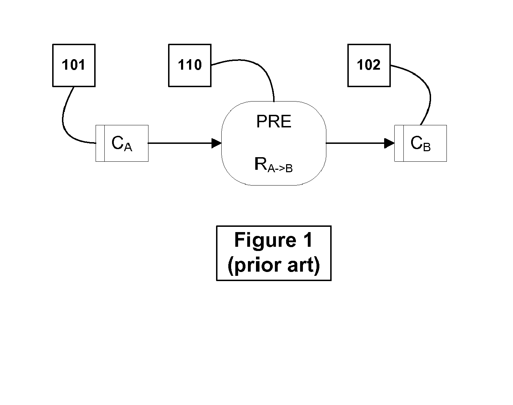

Figure 1 describes the way PRE works. 101 is data stored in the cloud by a first electronic device, said data being encrypted using a public key of the first electronic device. When the first electronic device wants to share this data with a second electronic device, the first electronic device calculates a re-encryption key, re-encryption key calculated using its own private key and the second user's public key. This re-encryption key is then uploaded to the cloud or server 110. The cloud or server 110, using this re-encryption key, re-encrypts the data. The method used does not involve any decryption of the data by the server 110, guaranteeing the privacy of the data. The result, data 102, can be shared with the second electronic device, the second electronic device is then able to decrypt said data 102 using its own private key. PRE method guarantees that no exchange of sensible data occurs as with the method based on symmetric key, and exempts electronic devices from downloading and uploading data they want to share as with the second described method based on asymmetric cryptography.

Nevertheless, this solution based on PRE technology suffers from some limitations. Indeed, each time an electronic device wants to access its content from a different device, it will have to repeat the precedent process of exchange of re-encryption key.

Today there is a need for a re-encryption key management process that avoids such limitations. There is a further need for such a management that facilitates an electronic device's access to its content from different devices.

### SUMMARY OF THE PRESENT INVENTION:

Present invention overcomes the previous limitations by proposing a method for secured cloud data distribution and restoration among multiple devices of a user, such method allowing the user to manage its several devices associated to its user account. In this context, data or content is stored within a cloud, i. e. stored within one or more servers, for example database servers or secured servers, and the user possesses at least one user account to access the cloud data storage service, cloud service in short.

The present invention describes a method to associate a second electronic device to a user account, the user profile being already associated to at least first content stored in a database server and to an at least first electronic device, said first content being encrypted using a public key for the first electronic device; the method being implemented by the database server and comprising the steps of:
a) Receiving from the second electronic device a request to associate with the user account, said request including authentication data, and;
b) When the authentication data is compatible with the user account, sending a request to the at least first electronic device for a re-encryption key from the first electronic device to the second electronic device (R_{1->2});
c) Associating the second electronic device and the re-encryption key received from the at least first electronic device with the user account.

Using present invention method, a user with various electronic devices can manage them, the method enabling the association of a new electronic device to its user account. Existing solutions describe how a user can register to a cloud data storage service, and upload encrypted content to the cloud or database server. In such solution, the content is encrypted using a public key from the device used by the user to access the service. The user is not able to access said content from another device, as the private key needed to decrypt the content is only known by the device used to encrypt the content. Present invention permits to register or associate a second electronic device, and as a result any number of electronic devices, to a user account. In a first step, the user, who has already accessed and stored content from a first electronic device, accesses the service from a second electronic device.

In a further embodiment of present invention, the method further comprises the steps of:
d) Receiving a request to access encrypted first content from the second electronic device,
e) Retrieving the first electronic device corresponding to the encrypted first content,
f) Retrieving the re-encryption key from to the first electronic device to the second electronic device in the user account associating the first and second electronic devices,
g) Re-encrypting the first content using the retrieved re-encryption key,
h) Sending the re-encrypted first content to the second electronic device.

Thus, if the user wants to access any content uploaded by an electronic device previously associated to its user account, the database server, using the Proxy Re-Encryption technology and the stored re-encryption keys, is able to re-encrypt said content and send it to the second electronic device, the second electronic device being able to decrypt said content using its private key. This is an improvement over existing solution as in existing solution the re-encryption key is generated on demand, making the availability of the first device mandatory to calculate said re-encryption key. In existing solution, when a second electronic device wants to access content uploaded - encrypted - by a first electronic device, if said first device is not available to calculate the re-encryption key from the first electronic device to the second electronic device, the second electronic device cannot access to the content. Present invention overcomes such limitation by calculating in advance needed re-encryption keys and storing them in association with the user account and previously associated electronic devices. Present invention allows a second electronic device to access content associated to a first electronic device even if said first device is not available for re-encryption key calculation.

In a further embodiment of present invention, the method according to the previous claim, wherein the request to access encrypted first content comprises the request to associate with the user account, the acts e) to h) being carried out after the association act c).

Advantageously, the user may, within a unique request, requests access to a content and authenticates to the cloud service, thus simplifying the user experience.

In a complementary embodiment, the method further comprises:
- Receiving from the second electronic device a re-encryption key from the second electronic device to the first electronic device (R_{2->1}),
- Associating the re-encryption key (R_{2->1}) received from the second electronic device with the user account.

By receiving, storing and managing the re-encryption key from the second electronic device to the first electronic device, and more generally from the second device to any other electronic device associated to the user account, the method solves the problem of dependency on electronic device availability when sharing content.

The present invention also discloses a secured server to associate a second electronic device to a user account, the user account being already associated to at least first content stored a database of said secured server and to an at least first electronic device, said first content being encrypted using a public key for the first electronic device, said secured server being arranged to:
- receive from an electronic device a request to login with a user account, said request including authentication data, and;
- determine when the authentication data is compatible with a user account and when the electronic device is not associated to the user account;
- send a request to at least another electronic device for a re-encryption key from the at least another electronic device to the electronic device;
- associate the electronic device and the re-encryption key received from the at least another electronic device with the user account.

Furthermore, another object of the invention concerns a computer program product recorded on a storage medium and executable by a computer in the form of a software agent including at least one software module setup to implement the method according to the present invention. This computer program can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

### FIGURES:

Figure 1 shows Proxy Re-Encryption principle;
Figure 2 shows an exemplary embodiment of the present system;
Figure 3 shows an exemplary embodiment of the process flow of an association of a new device;
Figure 4 shows an exemplary embodiment of the process flow for a device to access content stored in the cloud data storage service;
Figure 5 shows an exemplary embodiment of a database server.

### DESCRIPTION:

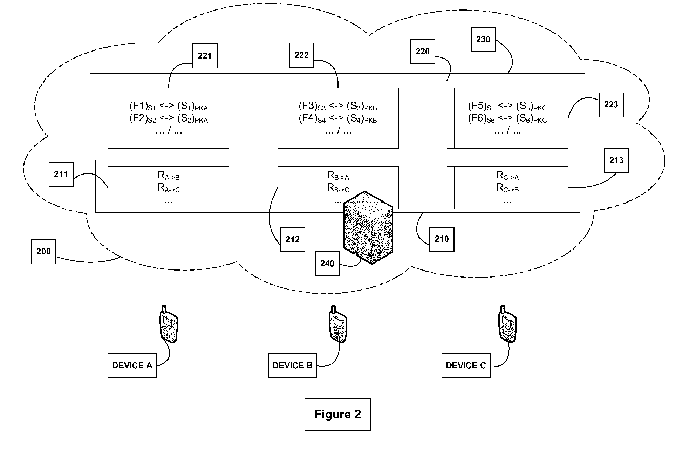

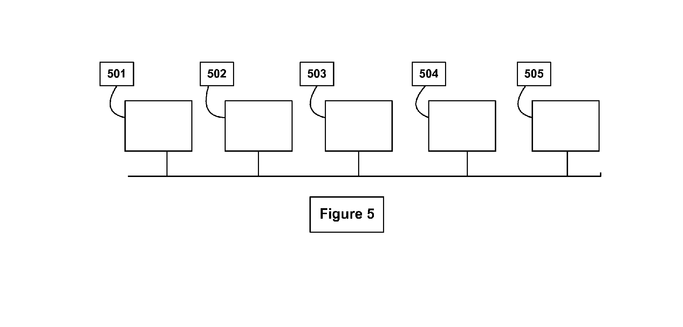

FIG. 2 shows an exemplary embodiment of the present system. Electronic devices A, B and C are here illustrated as mobile devices belonging to the same user. Such user has a subscription to a cloud data storage service 200, accessible through user credentials or authentication data (associated to his user account), such as a pair of login/password, or any other authentication methods known to the man skilled in the art. Cloud data storage service (or cloud service) 200 can be built on one or more cloud database servers 240 shown in FIG. 2, and described in further details in FIG. 5. The user can access the cloud data storage service 200, more precisely the cloud database server 240, from any of the electronic devices A, B or C, for example the electronic device A. Cloud database server 240 could be, for example, database server or secured server, it will be referred to as cloud database server in the following description. Electronic devices may be for instance a desktop, laptop, smartphone, tablet, more generally a mobile device or any other electronic device with connectivity to access the cloud service through wired lines or wireless connection.

Cloud database server 240 manages a cloud data storage (not shown in FIG. 2) comprising in the present system an entry 230 for the user, and more precisely his user account. The entry 230 may comprise for each electronic device of the user:
- subentries 220 for content, e.g. 221, 222 and 223 respectively for devices A, B and C,
- subentries 210 for re-encryption keys, e.g. 211, 212 and 213 respectively for devices A, B and C, as described here below.

When the user wants to store on the cloud data storage a file or a content F1, more generally data content, available on one of his electronic devices, e.g. a mobile device A, said device A, prior to uploading the content, encrypts the content F1 using a public key PKA associated to the device A. Encryption technology used may be asymmetric, or as described here, hybrid encryption for better performance, or any other encryption technology. In the present description using hybrid encryption for instance, the content F1 is first encrypted using a symmetric key S1, then the symmetric key S1 is encrypted using the public key PKA, both are then uploaded to the cloud database server 240 and stored within its cloud data storage 230, more precisely with subentry 221 associated to the device A. (F1)ₛ₁ is the content F1 encrypted by the symmetric key S1, (S1)_{PKA} is the symmetric key S1 encrypted using the public key from device A.

More generally, all content uploaded from electronic device A will be associated in the cloud storage to subentry 221. In one embodiment of the present system, subentries 221, 222 and 223 are thus logical identifications of content belonging respectively to devices A, B and C, while being stored within the same data storage of cloud data server 240.

The system comprises also a subentry 210 to store re-encryption keys from one device to another, the re-encryption keys being calculated by the devices then uploaded and stored by the cloud data storage. For instance, the re-encryption keys subentry 211 associated to a device A comprises all the re-encryption keys needed to re-encrypt the content associated to the device A (in subentry 221) using PRE technology, when transferring the content from the device A to another device. Similarly, subentry 212 comprises re-encryption keys associated to the device B and subentry 213 comprises the re-encryption keys associated to the device C. For example, R_{A->B} is the re-encryption key from the device A to the device B. The device A calculates this re-encryption key R_{A->B} using PRE technology, calculation is performed by device A using the private key associated to the public key PKA, the private key being only known by the device A, and using the public key PKB from the device B. Device A may learn the public key PKB of device B either directly via device B, via a peer-to-peer exchange using Near Field Communication (NFC) or Bluetooth technology for example. Device A may also learn the public key PKB via the cloud data storage service 200, in this case the public key PKB may be stored in association with the device B subentry 212 or another subentry dedicated to the device public keys (not shown in FIG. 2). Device A may alternatively learn public key PKB via any other service like a Public Key Infrastructure (PKI) system. In an additional embodiment of the present invention, the system 200 may integrate such a PKI system.

All data stored in subentries 220 and 210 are associated to a user account, different users share the cloud data storage but each user has specific data storage spaces or subentries 210 and 220, the user account itself being associated to an entry 230. Within said storage, each content or re-encryption key or any other data to be stored is associated to a device, said device being specifically identified. Any method known to the man skilled in the art may be used to identify a specific device. Different implementations of the present invention may used for example a Media Access Control (MAC) address, an International Mobile Subscriber Identity (IMSI), an International Mobile Equipment Identity (IMEI), a phone number, a randomly generated number or the previously described public key from a device to identify a device. Implementations of present invention may integrate a process to authenticate a given device, based for example on Public Key Infrastructure, said authentication of the device being dependant or not of the user authentication.

Different embodiments of the processes of present invention to manage the user devices are hereafter described.

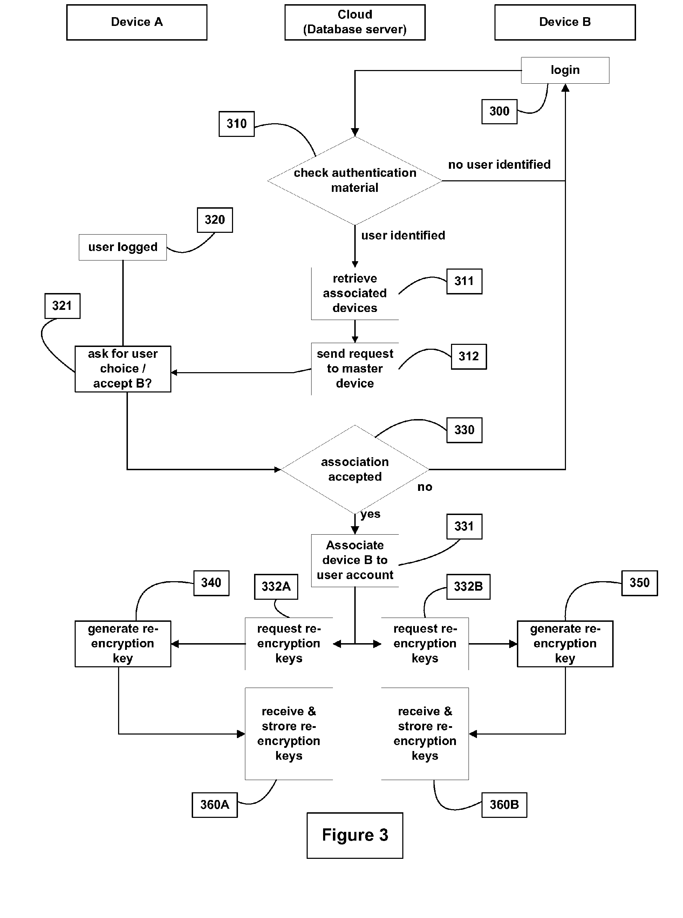

FIG. 3 shows an exemplary embodiment of the process flow of an association of a new device B to a user account. In this situation, the user has already created a user account and registered or associated the device A to said user account. In a first step 300, the user logs into the cloud service 200 from the device B; this could be performed via a web interface or a specific application previously installed on the device B. During this step 300, the user authenticates by providing user credentials or authentication data, such as a pair of login/password, or using any other authentication methods known to the man skilled in the art. Authentication data provided by the user is checked by the cloud service during step 310. If the authentication is successful - meaning that authentication data is compatible with the user account -, the cloud service will retrieve from its database the devices associated to the user account in a step 311 using entry 230 mentioned herebefore. If during step 311 the cloud server retrieves that the electronic device B is associated to the user account, the user is allowed to access the cloud service from the electronic device B. If not, the cloud service will proceed with creating associating the electronic device B with the user account as follows.

In an optional embodiment of the present process, the association of the electronic device B may be condition to a validation/authorization by the already associated electronic device A. To do so, during step 312, the cloud service determines which device among the list of devices associated to the user account is considered as the master device. The notion of master device corresponds here to a given device among all associated devices of the user account, the given device being elected to perform a number of tasks, like e.g. the validation of the association of a new device.

A request to authorize the association of the new electronic device B to the user account is thus sent by the cloud database server 240 to the master device, here for example the electronic device A. The user being also logged on the electronic device A in a previous step 320 will receive in step 321 through e.g. a user prompt a request from the cloud service to validate the association of the electronic device B. The request to the user may identify the electronic device B with an automatic method, based for example on the International Mobile Equipment Identity (IMEI) for a mobile device, or the user may be invited on electronic device B during a step not described here to enter a specific name for the new electronic device B, or a combination of both method. With this information, the user, connected via the electronic device A can identify which device the service cloud wants to associate to its user account.

If the user account of the legitimate user is compromised by an illegitimate user, this mechanism of master device prevents easy association of a new electronic device belonging to the illegitimate user - and thus prevents access to the cloud service by the illegitimate user. Indeed, using the user prompt implementation, and in the hypothesis that the legitimate user kept possession of the master device, the legitimate user will receive any request to associate a new electronic device on its master device and may then refuse to associate such a new electronic device that he does not recognize.

If the user in step 321 does not validate the association of electronic device B to its user account, the cloud service in step 330 will not associate electronic device B to the user account. The user connected from electronic device B may not be able to access the cloud service.

Steps 311, 312, 321 and 330 may be optional, and in one implementation of the present invention, the association of the electronic device B may be performed on successful validation of the credentials material during step 310. Nevertheless, this implementation lowers the security of the system.

In another embodiment of present invention, the electronic devices A and B may have exchanged their public key directly via a peer-to-peer exchange using Near Field Communication (NFC) or Bluetooth technology for example. Such an exchange may include a validation step by one or both of the electronic devices, prompting for example the user to validate the peer-to-peer exchange. Such exchange may also be considered as a validation by the electronic device A of the association of the device B to the user account, thus validating directly the step 330, the steps 312 and 321 not being performed.

In a complementary embodiment of the present invention, such peer-to-peer exchange may also facilitate the login steps 300 and 310 by replacing them by:
- a request from the electronic device A to the cloud database server with information on validation of the electronic device B access to the cloud service in association with the user account, said request comprising information on the identify of the electronic device B and;
- a request from the electronic device B to the cloud database server, said request comprising the information of identification of the electronic device B.
The cloud database server 240 will use the information on the electronic device B identity comprised in the request from the electronic device A to validate that information comprised in the electronic device B is compatible, i. e. both information on electronic device B identity match, and then associate the electronic device B to the user account.

As described before, identification of an electronic device may be based on, for example, a Media Access Control (MAC) address, an International Mobile Subscriber Identity (IMSI), an International Mobile Equipment Identity (IMEI), a phone number, a randomly generated number or the public key from a device, or used any other methods known to the man skilled in the art.

The notion of master device can also be implemented according to various methods. The master device can be for example the first electronic device associated to the user account, the user being able later to change the master device, choosing among all its associated electronic device one of them. In another implementation of the present invention, the request for validation of the user performed during step 321 can be sent to all associated electronic devices, or only to available electronic devices, likewise the association acceptance performed in step 330 by the cloud service may be validated upon reception of at least one validation or may request a certain number of validation, even validation from all associated electronic devices.

During step 331, the cloud service associates the electronic device B to the user account, completing a database with an entry for said new electronic device in association with the user account entry 230.

During step 332A, the cloud database server 240 sends a request to the electronic device A for a re-encryption key from the electronic device A to the electronic device B (R_{A->B}). Similarly, in step 332B, the cloud database server 240 sends a request to the electronic device B for a re-encryption key from the electronic device B to the electronic device A (R_{B->A}). In step 340 the electronic device A calculates the re-encryption key from the electronic device A to the electronic device B (R_{A->B}); identically, in step 350, the electronic device B calculates the re-encryption key from the electronic device B to the electronic device A (R_{B->A}). To perform the step 340, the electronic device A needs to know the public key associated to the electronic device B. This public key can be provided to the cloud service by the electronic device B during the login step 300, or later in the process at the request of the cloud database server 240 (not shown in FIG. 3). The cloud service then sends the device B public key to the electronic device A either for example during the step 312 or with the request of step 332A. This public key associated to device B can also be exchanged directly between the devices A and B via a peer-to-peer exchange using Near Field Communication (NFC) or Bluetooth technology for example. Possibly, in another implementation of the present invention, a Public Key Infrastructure may provide the device B pubic key to the electronic device A. In one additional implementation of the present invention, the cloud service stores electronic devices associated to a user account in a database, said database including an entry for a public key associated to each electronic device. In this implementation, during step 331, the cloud server will request from the electronic device B its public key and store this public key in association with the entry of the electronic device B.

When the cloud server receives the re-encryption keys calculated by the electronic devices A and B in steps 360A and 360B respectively, the cloud server will store these re-encryption keys in association with each device as described in FIG. 2 (R_{A->B} stored in 211, R_{B->A} stored in 212) and in association with the user account entry 230.

Some variation of previously described process may be implemented, it is for example possible to provide during the request 312 the public key of electronic device B to the electronic device A, enabling the electronic device A to send back the re-encryption key R_{A->B} as the validation of the association of electronic device B to the user account (as in optional step 321 described here before). It is also possible to consider that the electronic device B sends along the authentication material during step 300 a re-encryption key R_{B->A} provided that the electronic device B learnt the public key associated to the electronic device A previously. Electronic device B may have learnt the public key of electronic device A via a peer-to-peer exchange between electronic devices A and B using Near Field Communication (NFC) or Bluetooth technology for example, or via a Public Key Infrastructure.

In described implementation of the present invention, when the user connects to the cloud service providing its credentials from a new device (i. e. not associated yet to the user account), the cloud server automatically tries to associate this new electronic device to the user account.

In another implementation the cloud server may associate the new electronic device to the user account only at the request of the new device. This implementation could be particularly useful when the user is accessing the service from an electronic device belonging to someone else: the user would still be able to access certain part of the cloud service without associating said electronic device to its user account. Indeed, this allows the user to access part of the service provided by the cloud service when accessing the service from an un-trusted electronic device, as this un-trusted electronic device may not be associated automatically to the user account, but only at user request. Thus, the user may not be able to access content stored by other electronic devices associated to its user account, but the user may still be able to access limited functionalities of the cloud service, for example by getting a listing of the content stored, a listing of associated electronic devices, etc. This allows a limited access to the cloud service for the user without compromising security by associating an un-trusted electronic device to the user account.

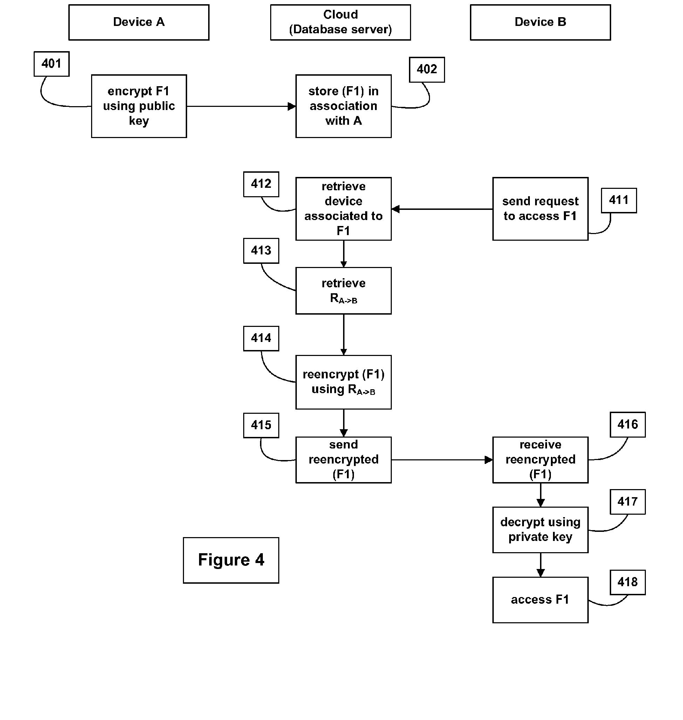

FIG. 4 illustrates how the method of present invention described previously allows an easy sharing of content between the electronic devices associated to a user account. Lets consider a content F1 stored by a user in the cloud storage service from an electronic device A. Firstly, during step 401, the electronic device A encrypts content F1 using the public key PKA from the electronic device A. We consider here asymmetric encryption for simplicity's sake, but other methods of encryption, like hybrid encryption may be used, as described before. Once the content F1 is encrypted, electronic device A sends the encrypted content (F1) to the cloud service. The cloud database server 240 then in step 402 stores the content in cloud database 230 in association with electronic device A and the user account. We consider here that electronic device A was already associated to the user account and logged into the cloud service using the user authentication data. When the user, connected to the cloud service from another electronic device B, said electronic device being already associated to its user account and logged into the cloud service, requests during step 411 to access said content (F1) stored in the cloud data storage, the cloud service, in step 412, first retrieves the electronic device associated to said content F1, here the electronic device A. Then the cloud service retrieves the re-encryption key R_{A->B} in step 413, said re-encryption key being previously stored in device A subentry 211 of the cloud data storage (as described previously in relation to FIG. 3). In step 414 the cloud database server 240 re-encrypts the content (F1) using said re-encryption key R_{A->B} and, in step 415, further sends the re-encrypted content to the electronic device B. The electronic device B receives the re-encrypted content (F1) in step 416; in a further step 417 said content (F1) is decrypted by the electronic device B using the private key associated to the public key of the electronic device B. Thus, in step 418, the electronic device B can access to the decrypted content F1.

In one additional embodiment of the present invention, the request sent by the electronic device B to access content F1 in step 411 may integrate also a request to associate to the user account. This could be the case for example when the user wants to access a content from an electronic device by activating a Uniform Resource Locator (URL), said URL comprising the request to associate the electronic device from which the URL is activated, this method allowing easy association of new electronic devices of a user. The authentication data of the user may also be comprised within the request, but may also be sent later on the process, for example for association validation.

It is to be noted that In the hybrid encryption technology described previously and advantageously used in the present invention, only the symmetric key associated to F1 will be re-encrypted during step 414, and it is the pair ((F1)_{S1} <-> (S1) R_{A->B}) that will be sent to the electronic device B during step 415, (F1)_{S1} being the content F1 encrypted using the symmetric key S1 and (S1)R_{A->B} being the symmetric key S1 encrypted by the public key PKA of the electronic device A and re-encrypted by the cloud service using the re-encryption key R_{A->B} from the electronic device A to the electronic device B. Using the private key associated to the public key PKB of the electronic device B, private key only known by the electronic device B, said device is able to decrypt (S1)R_{A->B}, and using this decrypted symmetric key S1, the electronic device B can then decrypt (F1)_{S1} and access the content F1.

In one implementation, the user may need to authenticate from an electronic device before requesting to have access to any content associated to the user account, alternatively, the user may request access to a content from an electronic device, the cloud service determining which user account said content is associated to and requesting the user to authenticate using said user account credentials. In this last implementation, the content is identified by a unique identifier, and the cloud service maintains a database associating the content to a user account.

FIG. 5 shows an exemplary embodiment of a cloud database server 240 that can used to implement the present invention. Cloud database server 240 is a server and can be defined as, for example, a secured server or as a database server. This is an illustration of the embodiment of the present invention, as the man skilled in the art may implement a cloud service using multiple database servers and distributing the data storage among them. The database server may integrate in 501 means for receiving requests and in 502 means for sending requests. Means 501 and 502 may have in common at least one network interface, said network interface allowing the cloud database server 240 to connect to a local area network, and possibly to Internet. The database server may have network interfaces to access others database server to constitute a cloud service. Means 503 of the database server allow the database server to store data, said data may comprise content uploaded by users, re-encryption keys, information to identify electronic devices, and, but not limited to, user account parameter, for example authentication data. Means 503 manage entries or subentries within a database related to user account and electronic devices, and are able to associate to a user account some electronic devices, and some content or re-encryption keys to electronic devices. The cloud database server 240 possesses means 504 to encrypt or decrypt content, said means being for example compatible with Proxy Re-Encryption technology. Database server comprises means 505 to manage the cloud service, possibly offering others services related to data storage, means 505 may integrate one or more CPU.

In the present description, cloud data storage was illustrated mainly as a single database. A database may be seen as a single entry for simplification purposes while actually being a distributed database with different physical storages.

## Claims

1. A method to associate a second electronic device to a user account, the user account being already associated to at least first content stored in a database server and to an at least first electronic device, said first content being encrypted using a public key for the first electronic device; the method being implemented by the database server and comprising the steps of:
a) Receiving from the second electronic device a request to login with the user account, said request including authentication data, and;
b) When the authentication data is compatible with the user account and when the second electronic device is not associated to the user account, sending a request to the at least first electronic device for a re-encryption key from the first electronic device to the second electronic device (R_{1->2});
c) Associating the second electronic device and the re-encryption key received from the at least first electronic device with the user account.

2. The method according to claim 1, further comprising:
d) Receiving a request to access encrypted first content from the second electronic device,
e) Retrieving the first electronic device corresponding to the encrypted first content,
f) Retrieving the re-encryption key from the first electronic device to the second electronic device in the user account associating the first and second electronic devices,
g) Re-encrypting the first content using the retrieved re-encryption key,
h) Sending the re-encrypted first content to the second electronic device.

3. The method according to the previous claim, wherein the request to access encrypted first content comprises the request to associate with the user account, the acts e) to h) being carried out after the association act c).

4. The method according to one of the previous claims, further comprising:
- Receiving from the second electronic device a re-encryption key from the second electronic device to the first electronic device (R_{2->1}),
- Associating the re-encryption key (R_{2->1}) received from the second electronic device with the user account.

5. The method according to one of the previous claims, further comprising:
- Receiving from the first electronic device its public key, and
- Sending a request to the second electronic device for a re-encryption key from the first electronic device to the second electronic device, said request comprising the received first electronic device public key.

6. The method according to one of the preceding claims, the request from the second electronic device to associate with the user account comprising the second electronic device's public key; the request to the first electronic device for a re-encryption key comprising said second electronic device's public key.

7. A secured server to associate a second electronic device to a user account, the user account being already associated to at least first content stored a database of said secured server and to an at least first electronic device, said first content being encrypted using a public key for the first electronic device, said secured server being arranged to:
- receive from an electronic device a request to login with a user account, said request including authentication data, and;
- determine when the authentication data is compatible with a user account and when the electronic device is not associated to the user account;
- send a request to at least another electronic device for a re-encryption key from the at least another electronic device to the electronic device;
- associate the electronic device and the re-encryption key received from the at least another electronic device with the user account.

8. A computer program product recorded on a storage medium and executable by a computer in the form of a software agent including at least one software module setup to implement the method according to any one of claims 1 to 6.
